# EUROPEAN PATENT APPLICATION

(11) **EP 3 872 728 A1**
(43) Date of publication of application: **01.09.2021**
(21) Application number: 21158947.8
(22) Date of filing: 24.02.2021
(51) Int. Cl.: G06Q 20/02, G06Q 20/06, G06Q 20/08, G06Q 20/38, G06Q 20/40

(54) **METHOD AND APPARATUS FOR PROCESSING TRANSACTION IN BLOCKCHAIN, DEVICE AND MEDIUM**

(30) Priority: 25.02.2020 CN 202010115200
(71) Applicant: BAIDU ONLINE NETWORK TECHNOLOGY (BEIJING) CO., LTD., Beijing 100085 (CN)
(72) Inventor: Wang, Yucao, Beijing, 100085 (CN); Xiao, Wei, Beijing, 100085 (CN)
(74) Representative: Maiwald Patent- und Rechtsanwaltsgesellschaft mbH

(57) **Abstract**

Embodiments of the present disclosure provide a method and an apparatus for processing blockchain transaction, an electronic device and a medium, and relate to a field of blockchain technologies. The method includes: obtaining a transaction request generated on an initiating node; performing at least one transaction execution control based on an actual service charge set in the transaction request; and generating an endorsement signature for the transaction request and feeding back the endorsement signature to the initiating node in response to determining that a result of the at least one transaction execution control meets a transaction execution condition, enabling the initiating node to submit the at least one transaction request to a blockchain network based on the endorsement signature to perform a chaining operation. The technical solution of the embodiments of the present disclosure flexibly controls transaction request execution based on the actual service charge set through endorsement service.

## Description

### TECHNICAL FIELD

The present disclosure relates to a field of computer technologies, and more particularly, to blockchain technologies.

### BACKGROUND

In existing blockchain systems, various functions are implemented through intelligent contract programs. In a process of adopting blockchain nodes to run intelligent contracts to implement transaction functions, hardware resources, such as CPU and memory, need to be consumed. Service charge is generally paid to a node for resources consumed by the node. That is, electronic resources elements in the blockchain is paid to the node, such as, gas and digital currency.

In the related art, the service charge required to execute the intelligent contracts is determined by consensus That is, resource usage of multiple dimensions such as CPU, memory, disk, and network is converted into a unified service charge according to a certain normalization algorithm. The calculation method of the service charge is a consensus behavior. All nodes in the blockchain network use the same calculation method to ensure verifiability of resource usage.

However, in actual network operation, actual resource cost consumed by each block-producing node is different. For example, for high-performance SSD and ordinary disks, prices of the same storage unit may vary by several times. Meanwhile, as the scale of the network increases, a number of computing and storage copies of the entire network also increases accordingly, so the computing and storage resources consumed to chain a transaction also increase.

Therefore, existing charging methods of determining the service charge by consensus are neither conducive to encouraging nodes to actively participate in network construction, nor conducive to growth of the blockchain network scale.

### SUMMARY

The present disclosure provides a method and an apparatus for processing blockchain transaction, an electronic device and a medium, to control a transaction processing process in a blockchain network through an effective service charge determination method.

Embodiments of a first aspect of the present disclosure provide a method for processing blockchain transaction, executed by an endorser end. The method includes: obtaining a transaction request generated on an initiating node; performing at least one transaction execution control based on an actual service charge set in the transaction request; and generating an endorsement signature for the transaction request and feeding back the endorsement signature to the initiating node in response to determining that a result of the at least one transaction execution control meets a transaction execution condition, enabling the initiating node to submit the at least one transaction request to a blockchain network based on the endorsement signature to perform a chaining operation.

An embodiment of the disclosure may have the following advantages or beneficial effects. With the technical solution of the embodiments of the present disclosure, by adding an endorsement service before the transaction request is executed, the execution of the transaction request may be controlled based on the actual service charge. At the endorser end, various transaction execution control rules, not limited to the consensus method deployed in the blockchain, may be set flexibly to determine the service charge. Therefore, the control of the service charge can be realized without relying on the consensus method through the endorsement service.

In addition, the method for processing blockchain transaction according to the above embodiments may further have the following additional technical features.

In an embodiment of the present disclosure, determining that the result of the at least one transaction execution control meets the transaction execution condition includes: combining at least one result of the at least one transaction execution control based on a preset logic rule to generate a final result, and determining whether the final result meets the transaction execution condition.

In an embodiment of the present disclosure, the preset logic rule includes at least one or a combination of an AND relation and an OR relation of the at least one result.

An embodiment of the disclosure has the following advantages or beneficial effects. Multiple transaction execution controls may be set, and the at least one result of the respective transaction execution controls may be combined to control how to provide the endorsement signature, and the solutions are flexible and diverse.

In an embodiment of the present disclosure, performing the at least one transaction execution control based on the actual service charge set in the transaction request includes: determining a consensus service charge of the transaction request based on a service charge computing rule of an intelligent contract on which the transaction request is based; determining that the result does not meet the transaction execution condition in response to determining that the actual service charge is less than the consensus service charge; and determining that the result meets the transaction execution condition in response to determining that the actual service charge is equal to or greater than the consensus service charge.

In an embodiment of the present disclosure, when the transaction request includes a plurality of transaction requests, performing the at least one transaction execution control based on the actual service charge set in the transaction request includes: obtaining a sequence by ranking differences between actual service charges in the plurality of transaction requests and the consensus service charge in a descending order; and determining a time order of meeting the transaction execution condition based on the sequence.

In an embodiment of the present disclosure, performing the at least one transaction execution control based on the actual service charge set in the transaction request includes: determining a historical reference value based on actual service charges of transaction requests of existing blocks in the blockchain; determining that the result meets the transaction execution condition in response to determining that the actual service charge set in the transaction request is equal to or greater than the historical reference value; and determining a time order of meeting the transaction execution condition based on processing capability of the initiating node in response to determining that the actual service charge is less than the historical reference value.

In an embodiment of the present disclosure, determining the time order of meeting the transaction execution condition based on the processing capability of the initiating node includes: adding the transaction request to a waiting pool and making the transaction request to line up based on the actual service charge; and extracting a transaction request ranked first from the waiting pool, and determining that the transaction request meets the transaction execution condition when the initiating node is available in a current block-producing period.

In an embodiment of the present disclosure, determining the historical reference value based on the actual service charges of the transaction requests of the existing blocks in the blockchain includes: calculating an average difference value based on a difference between an actual service charge in each transaction request in a last block of the blockchain and a consensus service charge, and determining the average difference as the historical reference value.

An embodiment of the disclosure has the following advantages or beneficial effects. The actual service charge may be controlled to be greater than the consensus service charge through the endorsement service, and on this basis, execution order of the transaction request may be controlled according to the actual service charges in a descending order.

In an embodiment of the present disclosure, the endorser end is configured on a blockchain node or configured to interact with a blockchain node based on a preset communication protocol.

In an embodiment of the present disclosure, before performing the at least one transaction execution control based on the actual service charge set in the transaction request, the method further includes: determining whether an initiating account or the initiating node of the transaction request belongs to an organizer of the endorser end.

An embodiment of the disclosure has the following advantages or beneficial effects. The endorser end and the node may belong to the same organizer, so that the actual service charge can be controlled based on the same interest considerations.

In a second aspect, embodiments of the disclosure provide a method for processing blockchain transaction, executed by a first blockchain node, and the method further includes: generating a transaction request, and setting an actual service charge in the transaction requests; transmitting the transaction request to an endorser end to perform at least one transaction execution control based on the actual service charge; obtaining an endorsement signature of the transaction request fed back by the endorser end, wherein the endorsement signature is generated in response to determining that a result of the transaction execution control meets a transaction execution condition; and executing the transaction request, encapsulating the endorsement signature into the transaction request, and submitting the transaction request to a blockchain network to perform a chaining operation.

In an embodiment of the present disclosure, the method further includes: receiving a transaction request submitted by a second blockchain node in the blockchain network; and refusing to executing the transaction request submitted by the second blockchain node in response to determining that the transaction request submitted by the second blockchain node does not include the endorsement signature.

In an embodiment of the present disclosure, after executing the transaction request, the method further includes: packing a plurality of transaction request submitted by a local node into a current block in a block-producing period of the local node.

In an embodiment of the present disclosure, the method further includes: in the block-producing period of the local node, refusing to pack the acquired transaction request into the current block when the acquired transaction request does not include the endorsement signature, or when a included endorsement signature does not belong to an organizer of the local node.

In a third aspect, embodiments of the disclosure provide an apparatus for processing blockchain transaction, configured in an endorser end. The apparatus includes: a transaction obtaining module, a service charge controlling module and an endorsement feedback module. The transaction obtaining module is configured to obtain a transaction request generated on an initiating node. The service charge controlling module is configured to perform at least one transaction execution control based on an actual service charge set in the transaction request. The endorsement feedback module is configured to generate an endorsement signature for the transaction request and feedback the endorsement signature to the initiating node in response to determining that a result of the at least one transaction execution control meets a transaction execution condition, to enable the initiating node to submit the at least one transaction request to a blockchain network based on the endorsement signature to perform a chaining operation.

In a fourth aspect, embodiments of the disclosure provide an apparatus for processing blockchain transaction, configured in a blockchain node, and the apparatus includes: a transaction generating module, a transaction transmitting module, a signature obtaining module and a transaction executing module. The transaction generating module is configured to generate a transaction request, and set an actual service charge in the transaction requests. The transaction transmitting module is configured to transmit the transaction request to an endorser end to perform at least one transaction execution control based on the actual service charge. The signature obtaining module is configured to obtain an endorsement signature of the transaction request fed back by the endorser end, wherein the endorsement signature is generated in response to determining that a result of the transaction execution control meets a transaction execution condition. The transaction executing module is configured to execute the transaction request, encapsulate the endorsement signature into the transaction request, and submit the transaction request to a blockchain network to perform a chaining operation.

In a fifth aspect, embodiments of the disclosure provide an electronic device. The electronic device includes: at least one processor, and a memory communicatively connected to the at least one processor. The memory stores instructions executable by the at least one processor, and when the instructions are executed by the at least one processor, the at least one processor is caused to implement the method for processing blockchain transaction according to the first aspect or the second aspect of the present disclosure.

In a sixth aspect, embodiments of the disclosure provide a non-transitory computer-readable storage medium storing computer instructions. When the instructions are executed, the computer is caused to implement the method for processing blockchain transaction according to the first aspect or the second aspect of the present disclosure.

Additional effects of the above-mentioned optional manners will be described below in combination with specific embodiments.

### BRIEF DESCRIPTION OF THE DRAWINGS

The drawings are used to better understand the solution and do not constitute a limitation to the disclosure, in which:
FIG. 1 is a flowchart of a method for processing blockchain transaction according to Embodiment 1 of the present disclosure.
FIG. 2 is a flowchart of a method for processing blockchain transaction according to Embodiment 2 of the present disclosure.
FIG. 3A is a flowchart of a method for processing blockchain transaction according to Embodiment 3 of the present disclosure.
FIG. 3B is a schematic diagram of a node architecture applicable to an embodiment of the present disclosure.
FIG. 4 is a flowchart of a method for processing blockchain transaction according to Embodiment 4 of the present disclosure.
FIG. 5 is a schematic diagram of an apparatus for processing blockchain transaction according to Embodiment 5 of the present disclosure.
FIG. 6 is a schematic diagram of an apparatus for processing blockchain transaction according to Embodiment 6 of the present disclosure.
FIG. 7 is a schematic diagram of an electronic device that implements embodiments of the present disclosure.

### DETAILED DESCRIPTION

The following describes the exemplary embodiments of the present disclosure with reference to the accompanying drawings, which includes various details of the embodiments of the present disclosure to facilitate understanding, which shall be considered merely exemplary. Therefore, those of ordinary skill in the art should recognize that various changes and modifications can be made to the embodiments described herein without departing from the scope and spirit of the present disclosure. For clarity and conciseness, descriptions of well-known functions and structures are omitted in the following description.

### Embodiment 1

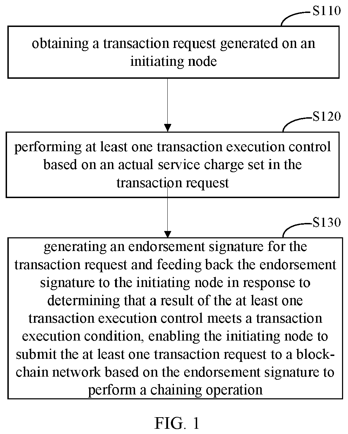

FIG. 1 is a flowchart of a method for processing blockchain transaction according to Embodiment 1 of the present disclosure. This embodiment is applied to control of a transaction request processing process in the blockchain. This embodiment may be executed by an apparatus for processing blockchain transaction configured in an endorser end. The apparatus may be implemented by hardware and/or software. The endorser end is a device that performs the endorsement function. The endorser end and a blockchain node may be integrated in one electronic device, or may be independently deployed in different electronic devices.

At illustrated in FIG. 1, the method includes the followings.

At block S I 10, a transaction request generated on an initiating node is obtained.

There are a plurality of blockchain nodes in a blockchain network, and for each blockchain node, a program of a blockchain system is deployed to store blockchain data. The program of the blockchain system provides a user with an interactive mode for the user to initiate a transaction request for implement a certain function on a blockchain node. Generally, one transaction request may be generated through an operation on one blockchain node, and the transaction request may be pre-executed by the blockchain node locally. The pre-execution includes various preparations before executing the transaction request, and a program of an intelligent contract is executed to implement content of the transaction request, to generate read-write operations on the blockchain data. And then, a pre-execution result is packaged with the transaction request and transmitted to other blockchain nodes in the blockchain network for other block nodes to verify and execute the transaction request to determine correctness of the pre-execution result.

In the execution process of the transaction request, the transaction request may be sent to the endorser end to request endorsement processing after the transaction request is generated on the initiating node. This may be controlled by the intelligent contract. When the intelligent contract is executed to pre-execute the transaction request, the intelligent contract may specify that it is required to send an endorsement request to the endorser end with a set address object.

At block S120, at least one transaction execution control is performed based on an actual service charge set in the transaction request.

The endorser end obtains the set actual service charge from the transaction request, and a value of the actual service charge is set by the user when the transaction request is generated. Generally, a service charge is estimated based on consumed resources of the transaction request, and the user can manually adjust the service charge to determine a service charge that meets actual needs.

The endorser end performs at least one transaction execution control based on the actual service charge. The transaction execution control is determining whether a node to is able to execute the transaction request or when the transaction request is executed based on whether an endorsement signature is provided or when the endorsement signature is provided. The endorsement signature may be a signature created by the endorser end using its own private key, which may be used for signature verification by other blockchain nodes using a public key.

At block S130, an endorsement signature is generated for the transaction request and the endorsement signature is fed back to the initiating node in response to determining that a result of the at least one transaction execution control meets a transaction execution condition, enabling the initiating node to submit the at least one transaction request to a blockchain network based on the endorsement signature to perform a chaining operation.

The result of the transaction execution control may be that the transaction execution condition is satisfied or not. If there are multiple transaction execution controls, there may be a plurality of results indicating whether the transaction execution condition is satisfied. These results may be used independently in combination to determine a final result.

In detail, determining that the result of the at least one transaction execution control meets the transaction execution condition includes: combining at least one result of the at least one transaction execution control based on a preset logic rule to generate a final result, and determining whether the final result meets the transaction execution condition.

The preset logic rule includes at least one or a combination of an AND relation and an OR relation of the at least one result. For example, when all of the multiple transaction execution controls meet the transaction execution condition, the final result is considered as meeting the transaction execution condition. Alternatively, the transaction execution controls are executed sequentially, and when a result of any one of the transaction execution controls is failed, the transaction execution condition is not met.

When the endorser end determines that the transaction execution condition is met, the endorser end provides the endorsement signature for the transaction request, thereby enabling the transaction request to have a precondition for initiating the chaining operation, otherwise the transaction request may be rejected.

With the technical solution of the embodiments of the present disclosure, by adding the endorsement service before the transaction request is executed, the execution of the transaction request may be controlled based on the actual service charge. At the endorser end, various transaction execution control rules may be flexibly set, not limited to the consensus method deployed in the blockchain for determining the service charge. Therefore, through the endorsement service, the control of the service charge is realized without relying on the consensus method. Moreover, the technical solution is compatible with the method of verifying the service charge through the consensus method. In detail, other blockchain nodes may determine the value of the service charge based on the consensus method of the intelligent contract during a process of verifying the execution result of the transaction request. If the actual service charge is not less than the determined consensus service charge, other blockchain nodes may determine that the verification passes, and the service charges determined based on the consensus method are the same. The pre-posed endorsement service in this embodiment is compatible with the consensus verification method, which add richness to the control rules. Therefore, expenditure of the service charge matches with resource consumption of a node running the intelligent contracts, which may be dynamically adjusted based on market factors. The content of the transaction execution control at the endorser end may be dynamically adjusted and updated.

### Embodiment 2

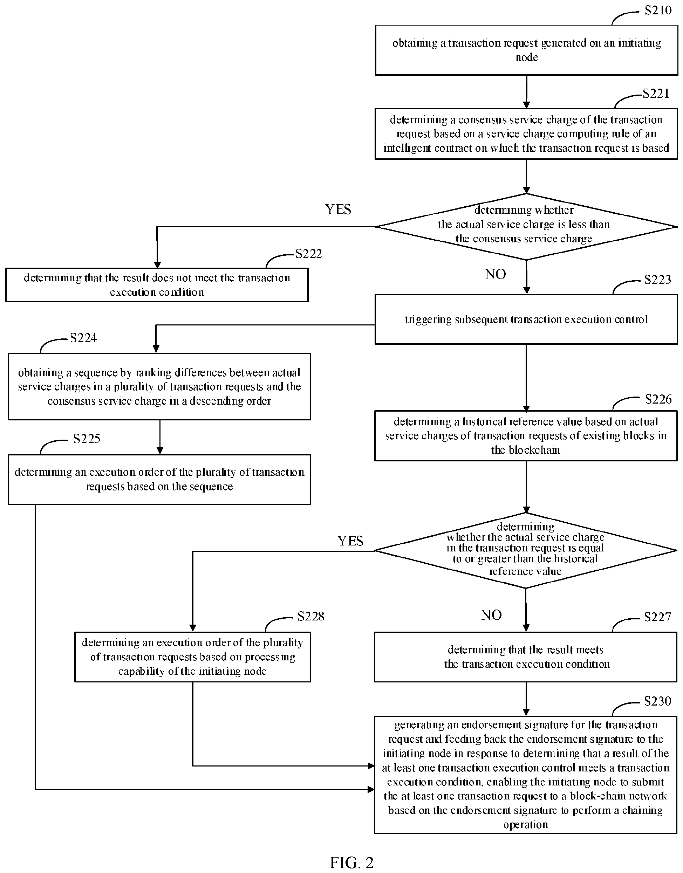

FIG. 2 is a flowchart of a method for processing blockchain transaction according to Embodiment 2 of the present disclosure. This embodiment is based on the above technical solution, and further described the transaction execution control performed by the endorser end in detail. This embodiment includes the followings.

At block S210, a transaction request generated on an initiating node is obtained.

At block S220, at least one transaction execution control is performed based on an actual service charge set in the transaction request.

In this embodiment, the action at block S220 includes the followings.

At block S221, a consensus service charge of the transaction request is determined based on a service charge computing rule of an intelligent contract on which the transaction request is based.

The service charge computing rule may be calculated according to the resources consumed by the execution of the intelligent contract. For example, the resource usage in multiple dimensions such as CPU, memory, disk, and network may be converted into a unified service charge according to a certain normalization algorithm. The service charge computing rule adopted by the endorser end is the same as the service charge computing rule used in the blockchain node. That is, the minimum requirement for the payment of the service charge is guaranteed.

At block S222, it is determined that the result does not meet the transaction execution condition in response to determining that the actual service charge is less than the consensus service charge.

When the actual service charge set in the transaction request by the user is less than the consensus service charge, the execution may be rejected, and it is determined that the transaction execution condition is not met. Thus, the endorser end does not provide the endorsement signature, which is equivalent to controlling the node to refuse to execute the transaction request.

At block S223, it is determined that the result meets the transaction execution condition in response to determining that the actual service charge is equal to or greater than the consensus service charge, or subsequent execution of the transaction execution control is triggered.

In this step, it is equivalent to determining that the transaction request meets the minimum requirement of the service charge. At this time, the endorsement signature may be provided immediately, and subsequent transaction execution control may be continued to be performed.

In this embodiment, another transaction execution control at block S224 may be continue to be executed.

At block S224, a sequence is obtained by ranking differences between actual service charges in a plurality of transaction requests and the consensus service charge in a descending order.

At block S225, an execution order of the plurality of transaction requests is determined based on the sequence.

The above transaction execution control is equivalent to controlling, based on the actual service charges, the time order in which the node executes the transaction request. The endorser end may calculate the differences between each actual service charge of the transaction request and the consensus service charge, and rank the differences in a descending order. The endorser end provides endorsement signatures for the transaction requests sequentially, so that the nodes process the transaction requests in order. When concurrent volume of transaction requests is large, a transaction request with a high service charge may be effectively controlled to be executed first, and a transaction request waiting overtime may be invalid due to timeout.

In an embodiment, the following transaction execution control may be executed. The following transaction execution control may also be called a historical value control.

At block S226, a historical reference value is determined based on actual service charges of transaction requests of existing blocks in the blockchain.

The historical reference value is a value that reflects the service charge of a transaction request in an existing block. The historical reference value may be determined according to various rules, as long as historical situation may be reflected as desired. In an embodiment of the present disclosure, an average difference may be calculated according to the differences between actual service charges in respective transaction requests in the last block of the blockchain and the consensus service charge, and the average difference is determined as the historical reference value. A difference between an actual service charge and the consensus service charge may reflect a floating level of the service charge relative to a minimum value.

At block S227, it is determined that the result meets the transaction execution condition in response to determining that the actual service charge set in the transaction request is equal to or greater than the historical reference value.

At block S228, an execution order of the plurality of transaction requests is determined based on processing capability of the initiating node in response to determining that the actual service charge is less than the historical reference value.

Through the above transaction execution control, it is possible to allow chaining operation to be directly performed on a transaction request with an actual service charge greater than the historical reference value. While a transaction request with an actual service charge less than the historical reference value needs to wait, and a time order for performing the chaining operation may be determined according to the processing capacity of the node. Similarly, when the concurrent volume of transaction requests is large, a chaining operation may not be executed in time for a waiting transaction request, or may be executed when idle.

Determining the execution order of the plurality of transaction requests based on the processing capability of the initiating node includes: adding the transaction request to a waiting pool and making the transaction request to line up based on the actual service charge; and extracting a transaction request ranked first from the waiting pool, and determining that the transaction request meets the transaction execution condition when the initiating node is available in a current block-producing period.

In the above solution, the endorser end may maintain interaction with the initiating node, and may learn the processing capability of the initiating node. The transaction requests queued in the waiting pool may be extracted according to the processing capability, and an endorsement signature is provided for the initiating node to execute.

In an embodiment, the initiating node and other nodes in the blockchain network may determine their own block-producing period based on a consensus mechanism. That is, during the block-producing period, a block-producing node has a power to package and form a block. In the block-producing period of other nodes, the initiating node may receive a block formed by other nodes and verify the transaction request and the block.

When the initiating node is used as a block-producing node, the initiating node may process a transaction request with a high actual service charge first during the current block-producing period.

At block S230, an endorsement signature is generated for the transaction request and the endorsement signature is fed back to the initiating node in response to determining that a result of the at least one transaction execution control meets a transaction execution condition, enabling the initiating node to submit the at least one transaction request to a blockchain network based on the endorsement signature to perform a chaining operation.

The endorsement signature is generated according to the results of the above three transaction execution controls. In detail, the endorsement signature may be generated according to the above-determined time order. The above transaction execution controls may be implemented independently or in combination, and the specific execution order of which is not limited.

In the technical solution of this embodiment, an alternative implementation of the transaction execution control is provided. In the endorsement service, the respective transaction requests are screened and controlled according to the service charge, which helps to perform adjustment according to network operation condition. For example, if an endorser end of a certain node deliberately drives up the service charge and only executes a transaction request with a relative high actual service charge, the user may choose other nodes to initiate a transaction request. For nodes, a transaction request with a high actual service charge may be executed first, which may also encourage the nodes to provide high-quality hardware resources as much as possible and attract more users to initiate transaction requests.

### Embodiment 3

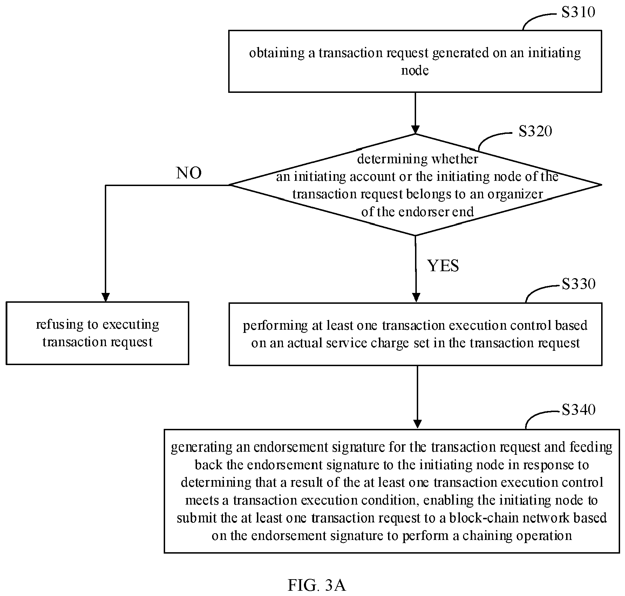

FIG. 3A is a flowchart of a method for processing blockchain transaction according to Embodiment 3 of the present disclosure. In this embodiment, as illustrated in FIG. 3B, the endorser end is configured in a blockchain node, which may be implemented in hardware and/or software. For electronic devices A, B, and C shown in FIG. 3B, endorser ends A, B, and C are respectively configured, and blockchain nodes A, B, and C are also configured. Configuring the blockchain nodes means installing a program and data of a blockchain system in the electronic device, and configuring the endorser end means installing a program and data executed by the endorser end.

For a consortium blockchain, a blockchain network is composed of a plurality of consortium member nodes. The consortium member nodes generally have a block-producing right in turn based on a consensus mechanism, and may produce a block in an allocated block-producing period, that is, the block-producing nodes. The block-producing node may also be called a miner. A consortium member is regarded as an interest organization. Each interest organization may have one or more nodes. Each interest organization is generally equipped with an endorser end to implement its own rules of transaction execution control. The endorsement control executed by the endorser end does not affect an original transaction request processing procedure on the blockchain, but an additional endorsement service control is added in a pre-stage of the transaction request execution. The endorser end may be integrated with the blockchain node in the same electronic device. Certainly, the endorser end and the blockchain node may also be installed in different electronic devices and interact with each other based on a preset communication protocol.

In an embodiment, as illustrated in FIG. 3A, the method further includes the followings.

At block S310, a transaction request generated on an initiating node is obtained.

The initiating node may generate the transaction request by the user during its own block-producing period or non-block-producing period. After the transaction request is generated, the endorser end is requested to perform endorsement service.

At block S320, it is determined whether an initiating account or the initiating node of the transaction request belongs to an organizer of the endorser end. If yes, an action at block S330 is executed, otherwise, the endorsement service is refused to be executed.

A node may provide the transaction request to an endorser end designated by the same organizer, or to any endorser end.

The endorser end may identify whether the initiating account or the initiating node of the transaction request belongs to a same organizer as the endorser end. If the initiating account or the initiating node of the transaction request belongs to the same organizer, the endorsement service is provided, otherwise the endorsement service is refused to be provided. As illustrated in FIG. 3B, a node may also refuse to process a transaction request endorsed and signed by an endorser end from other organizers. For example, a blockchain node B refuses to execute a transaction request endorsed and signed by an endorser end C.

Certainly, an endorser end may also provide open and public endorsement services, that is, providing endorsement services for all nodes.

At block S330, at least one transaction execution control is performed based on an actual service charge set in the transaction request.

At block S340, an endorsement signature is generated for the transaction request and fed back to the initiating node in response to determining that a result of the at least one transaction execution control meets a transaction execution condition, enabling the initiating node to submit the at least one transaction request to a blockchain network based on the endorsement signature to perform a chaining operation.

With the technical solution of this embodiment, independent control of different interest organizers is achieved through the organizer of the endorser end. The block-producing node in each organizer may only receive a transaction request authenticated by the endorsement service from its own organizer and perform the chaining operation, thus realizing the endorsement signature control. The endorsement signature control means that a block-producing node in an organizer only receives a transaction request with an endorsement signature of its own organizer and performs the chaining operation to achieve the purpose of non-consensus traffic selection. All traffic entering the organizer has to go through the endorsement service, and the block-producing node does not directly access external traffic.

The embodiments of the disclosure provide a non-consensus service charge selection method, which may perform marketization adjustment on the service charge of the intelligent contract in the market without changing the current consensus of the blockchain network, thus the block-producing node has more pricing power.

### Embodiment 4

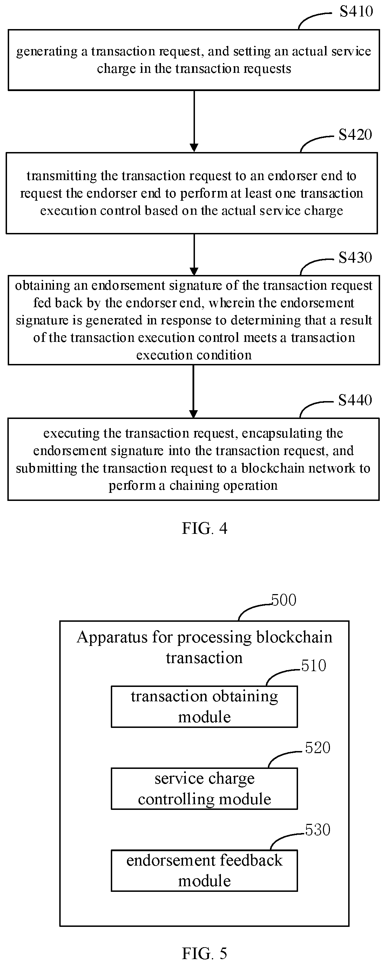

FIG. 4 is a flowchart of a method for processing blockchain transaction according to Embodiment 4 of the present disclosure. This embodiment is executed by a blockchain node and is implemented in combination with the above-mentioned endorser end. The method includes the followings.

At block S410, a transaction request is generated, and an actual service charge is set in the transaction requests.

At a blockchain node, a user may generate the transaction request based on an intelligent contract, and the user may set the actual service charge. The user may set an actual value based on a reference value given in the intelligent contract, which may be manually adjusted.

At block S420, the transaction request is transmitted to an endorser end to request the endorser end to perform at least one transaction execution control based on the actual service charge.

As the initiating node, the blockchain node prepares to pre-execute the transaction request. Firstly, the transaction request is sent to the endorser end to request the endorsement service. The node may initiate an endorsement request to an endorser end of an organizer to which the node belongs.

At block S430, an endorsement signature of the transaction request fed back by the endorser end is obtained, the endorsement signature is generated in response to determining that a result of the transaction execution control meets a transaction execution condition.

As provided in the foregoing embodiments, the endorser end performs the transaction execution control, and provides the endorsement signature or refuses to provide the endorsement signature according to a time order.

At block S440, the transaction request is executed, the endorsement signature is encapsulated into the transaction request, and the transaction request is submitted to a blockchain network to perform a chaining operation.

After the node obtains the endorsement signature, the transaction request may be executed locally, the endorsement signature is encapsulated and submitted to the blockchain network for verification by other nodes in order to perform the chaining operation. In an embodiment, the node may identify whether the endorsement signature is an endorsement signature of an endorser end of the same organizer, if not, the operation may be refused, otherwise, the transaction request is executed.

If the node cannot provide the endorsement signature, the transaction request may not pass the verification of other nodes. In detail, the method further includes: receiving a transaction request submitted by a second blockchain node in the blockchain network; and refusing to executing the transaction request submitted by the second blockchain node in response to determining that the transaction request submitted by the second blockchain node does not include the endorsement signature.

In an embodiment, the blockchain node can obtain the transaction request at any time, initiate the endorsement request, and pre-execute the transaction request. However, after the blockchain node executes the transaction request, the method also includes: packing a plurality of transaction request submitted by a local node into a current block in a block-producing period of the local node.

In other words, the blockchain node may perform the operation of a block packaging operation on the transaction request generated by the local node in the block-producing period to initiate the chaining operation.

In an embodiment, the method further includes: in the block-producing period of the local node, the acquired transaction request is refused to be packed into the current block when the acquired transaction request does not include the endorsement signature, or when a included endorsement signature does not belong to an organizer of the local node.

The above technical solution enables, through the endorsement service, nodes of the same organizer to preferentially package a request endorsed and signed by their own organizer to perform the chaining operation. A transaction request transmitted by other nodes may be verified, but the operation of packaging and chaining may be refused.

In the embodiments of the disclosure, the non-consensus service charge selection method provided by using the endorsement service enables the block-producing node to have a higher service charge pricing power, thereby realizing market-based pricing of service charge of intelligent contract execution, and encouraging the block-producing node greatly, and ultimately increasing the scale of the entire network to achieve higher network credibility. The technical solutions of the embodiments of the present disclosure are implemented in a non-consensus manner, and there is no need to perform a hard-fork upgrade of the original blockchain network, and a pluggable hot upgrade can be performed.

### Embodiment 5

FIG. 5 is a schematic diagram of an apparatus 500 for processing blockchain transaction according to Embodiment 5 of the present disclosure. The apparatus 500 is configured in an endorser end. The apparatus includes: a transaction obtaining module 510, a service charge controlling module 520 and an endorsement feedback module 530.

The transaction obtaining module 510 is configured to obtain a transaction request generated on an initiating node. The service charge controlling module 520 is configured to perform at least one transaction execution control based on an actual service charge set in the transaction request. The endorsement feedback module 530 is configured to generate an endorsement signature for the transaction request and feed back the endorsement signature to the initiating node in response to determining that a result of the at least one transaction execution control meets a transaction execution condition, to enable the initiating node to submit the at least one transaction request to a blockchain network based on the endorsement signature to perform a chaining operation.

In embodiment of this disclosure, the non-consensus service charge selection method provided by using the endorsement service enables the block-producing node to have a higher service charge pricing power, thereby realizing market-based pricing of service charge of the intelligent contract execution, and encouraging the block-producing node greatly, and increasing scale of the entire network to achieve better network credibility.

In an embodiment of the present disclosure, the endorsement feedback module 530 is further configured to combine at least one result of the at least one transaction execution control based on a preset logic rule to generate a final result, and determine whether the final result meets the transaction execution condition.

In an embodiment of the present disclosure, the preset logic rule includes at least one or a combination of an AND relation and an OR relation of the at least one result.

In an embodiment of the present disclosure, the service charge controlling module 520 is further configured to: determine a consensus service charge of the transaction request based on a service charge computing rule of an intelligent contract on which the transaction request is based; determine that the result does not meet the transaction execution condition in response to determining that the actual service charge is less than the consensus service charge; and determine that the result meets the transaction execution condition in response to determining that the actual service charge is equal to or greater than the consensus service charge.

In an embodiment of the present disclosure, the service charge controlling module 520 is further configured to: obtain a sequence by ranking differences between actual service charges in the plurality of transaction requests and the consensus service charge in a descending order; and determine an execution order of the plurality of transaction requests based on the sequence.

In an embodiment of the present disclosure, the service charge controlling module 520 is further configured to: determine a historical reference value based on actual service charges of transaction requests of existing blocks in the blockchain; determine that the result meets the transaction execution condition in response to determining that the actual service charge set in the transaction request is equal to or greater than the historical reference value; and determine an execution order of the plurality of transaction requests based on processing capability of the initiating node in response to determining that the actual service charge is less than the historical reference value.

In the above solution, the service charge controlling module 520 determining the execution order of the plurality of transaction requests based on the processing capability of the initiating node includes: adding the transaction request to a waiting pool and making the transaction request to line up based on the actual service charge; and extracting a transaction request ranked first from the waiting pool, and determining that the transaction request meets the transaction execution condition when the initiating node is available in a current block-producing period.

In an embodiment of the present disclosure, determining the historical reference value based on the actual service charges of the transaction requests of the existing blocks in the blockchain includes: calculating an average difference value based on a difference between an actual service charge in each transaction request in a last block of the blockchain and a consensus service charge, and determining the average difference as the historical reference value.

In an embodiment of the present disclosure, the endorser end is configured in the blockchain node, or interacts with the blockchain node based on a preset communication protocol.

In an embodiment of the present disclosure, the apparatus further includes: an organizer identifying module. The organizer identifying module is configured to determine whether an initiating account or the initiating node of the transaction request belongs to an organizer of the endorser end before performing the at least one transaction execution control based on the actual service charge set in the transaction request.

### Embodiment 6

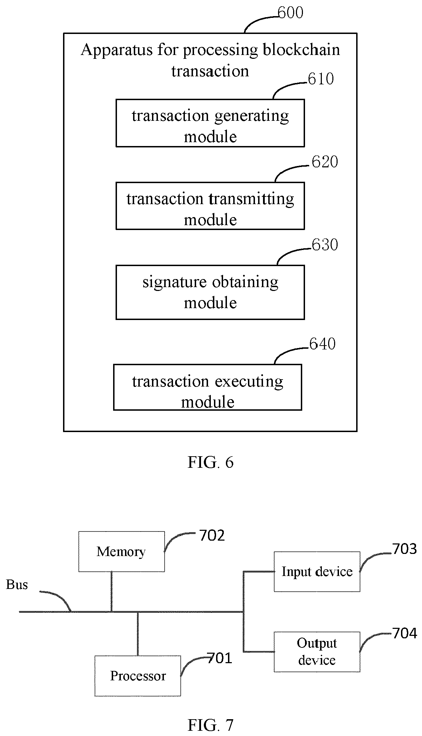

FIG. 6 is a schematic diagram of an apparatus 600 for processing blockchain transaction according to Embodiment 6 of the present disclosure. This apparatus is configured in a blockchain node. The apparatus includes: a transaction generating module 610, a transaction transmitting module 620, a signature obtaining module 630 and a transaction executing module 640.

The transaction generating module 610 is configured to generate a transaction request, and set an actual service charge in the transaction requests. The transaction transmitting module 620 is configured to transmit the transaction request to an endorser end to request the endorser end to perform at least one transaction execution control based on the actual service charge. The signature obtaining module 630 is configured to obtain an endorsement signature of the transaction request fed back by the endorser end, in which the endorsement signature is generated in response to determining that a result of the transaction execution control meets a transaction execution condition. The transaction executing module 640 is configured to execute the transaction request, encapsulate the endorsement signature into the transaction request, and submit the transaction request to a blockchain network to perform a chaining operation.

In an embodiment of the present disclosure, the apparatus further includes: a transaction verifying module. The transaction verifying module is configured to receive a transaction request submitted by a second blockchain node in the blockchain network; and refuse to executing transaction request submitted by the second blockchain node in response to determining that the transaction request submitted by the second blockchain node does not include the endorsement signature.

In an embodiment of the present disclosure, the apparatus further includes: a block producing module. The block producing module is configured to, after executing the transaction request, pack a plurality of transaction request submitted by a local node into a current block in a block-producing period of the local node.

In an embodiment of the present disclosure, the apparatus further includes: a transaction refusing module. The transaction refusing module is configured to, in the block-producing period of the local node, refuse to pack the acquired transaction request into the current block when the acquired transaction request does not include the endorsement signature, or when a included endorsement signature does not belong to an organizer of the local node.

According to the embodiments of the present disclosure, the disclosure also provides an electronic device and a readable storage medium.

FIG. 7 is a schematic diagram of an electronic device that implements embodiments of the present disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 7, the electronic device includes: one or more processors 701, a memory 702, and interfaces for connecting various components, including a high-speed interface and a low-speed interface. The various components are interconnected using different buses and can be mounted on a common mainboard or otherwise installed as required. The processor may process instructions executed within the electronic device, including instructions stored in or on the memory to display graphical information of the GUI on an external input/output device such as a display device coupled to the interface. In other embodiments, a plurality of processors and/or buses can be used with a plurality of memories and processors, if desired. Similarly, a plurality of electronic devices can be connected, each providing some of the necessary operations (for example, as a server array, a group of blade servers, or a multiprocessor system). A processor 701 is taken as an example in FIG. 7.

The memory 702 is a non-transitory computer-readable storage medium according to the disclosure. The memory stores instructions executable by at least one processor, so that the at least one processor executes the method according to the disclosure. The non-transitory computer-readable storage medium of the disclosure stores computer instructions, which are used to cause a computer to execute the method according to the disclosure.

As a non-transitory computer-readable storage medium, the memory 702 is configured to store non-transitory software programs, non-transitory computer executable programs and modules, such as program instructions/modules (for example, the transaction obtaining module 510, the service charge controlling module 520, and the endorsement feedback module 530 shown in FIG. 5, or the transaction generating module 610, the transaction transmitting module 620, the signature obtaining module 630, and the transaction executing module 640 shown in FIG. 6) corresponding to the method in the embodiment of the present disclosure. The processor 701 executes various functional applications and data processing of the server by running non-transitory software programs, instructions, and modules stored in the memory 702, that is, implementing the method in the foregoing method embodiments.

The memory 702 may include a storage program area and a storage data area, where the storage program area may store an operating system and application programs required for at least one function. The storage data area may store data created according to the use of the electronic device for implementing the method. In addition, the memory 702 may include a high-speed random access memory, and a non-transitory memory, such as at least one magnetic disk storage device, a flash memory device, or other non-transitory solid-state storage device. In some embodiments, the memory 702 may include a memory remotely disposed with respect to the processor 701, and these remote memories may be connected to the electronic device for implementing the method through a network. Examples of the above network include, but are not limited to, the Internet, an intranet, a local area network, a mobile communication network, and combinations thereof.

The electronic device for implementing the method may further include: an input device 703 and an output device 704. The processor 701, the memory 702, the input device 703, and the output device 704 may be connected through a bus or in other manners. In FIG. 7, the connection through the bus is taken as an example.

The input device 703 may receive inputted numeric or character information, and generate key signal inputs related to user settings and function control of an electronic device for implementing the method, such as a touch screen, a keypad, a mouse, a trackpad, a touchpad, an indication rod, one or more mouse buttons, trackballs, joysticks and other input devices. The output device 704 may include a display device, an auxiliary lighting device (for example, an LED), a haptic feedback device (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, application specific integrated circuits (ASICs), computer hardware, firmware, software, and/or combinations thereof. These various embodiments may be implemented in one or more computer programs, which may be executed and/or interpreted on a programmable system including at least one programmable processor. The programmable processor may be dedicated or general purpose programmable processor that receives data and instructions from a storage system, at least one input device, and at least one output device, and transmits the data and instructions to the storage system, the at least one input device, and the at least one output device.

These computing programs (also known as programs, software, software applications, or code) include machine instructions of a programmable processor and may utilize high-level processes and/or object-oriented programming languages, and/or assembly/machine languages to implement these calculation procedures. As used herein, the terms "machine-readable medium" and "computer-readable medium" refer to any computer program product, device, and/or device used to provide machine instructions and/or data to a programmable processor (for example, magnetic disks, optical disks, memories, programmable logic devices (PLDs), including machine-readable media that receive machine instructions as machine-readable signals. The term "machine-readable signal" refers to any signal used to provide machine instructions and/or data to a programmable processor.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, sound input, or tactile input).

The systems and technologies described herein can be implemented in a computing system that includes background components (for example, a data server), or a computing system that includes middleware components (for example, an application server), or a computing system that includes front-end components (For example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), and the Internet.

The computer system may include a client and a server. The client and server are generally remote from each other and interacting through a communication network. The client-server relation is generated by computer programs running on the respective computers and having a client-server relation with each other.

It should be understood that the various forms of processes shown above can be used to reorder, add or delete steps. For example, the steps described in the disclosure may be performed in parallel, sequentially, or in a different order, as long as the desired result of the technical solution disclosed in the disclosure is achieved, which is not limited herein.

The above specific embodiments do not constitute a limitation on the protection scope of the present disclosure. Those skilled in the art should understand that various modifications, combinations, sub-combinations and substitutions can be made according to design requirements and other factors. Any modification, equivalent replacement and improvement made within the spirit and principle of this application shall be included in the protection scope of this application.

## Claims

1. A method for processing blockchain transaction, executed by an endorser end, and the method comprising:
obtaining (S110, S210, S310) a transaction request generated on an initiating node;
performing (S120, S330) at least one transaction execution control based on an actual service charge set in the transaction request; and
generating (S130, S230, S340) an endorsement signature for the transaction request and feeding back the endorsement signature to the initiating node in response to determining that a result of the at least one transaction execution control meets a transaction execution condition, enabling the initiating node to submit the at least one transaction request to a blockchain network based on the endorsement signature to perform a chaining operation.

2. The method according to claim 1, wherein determining that the result of the at least one transaction execution control meets the transaction execution condition comprises:
combining at least one result of the at least one transaction execution control based on a preset logic rule to generate a final result, and determining whether the final result meets the transaction execution condition.

3. The method according to claim 2, wherein the preset logic rule comprises at least one or a combination of an AND relation and an OR relation of the at least one result.

4. The method according to any one of claims 1-3, wherein performing the at least one transaction execution control based on the actual service charge set in the transaction request comprises:
determining (S221) a consensus service charge of the transaction request based on a service charge computing rule of an intelligent contract on which the transaction request is based;
determining (S222) that the result does not meet the transaction execution condition in response to determining that the actual service charge is less than the consensus service charge; and
determining that the result meets the transaction execution condition in response to determining that the actual service charge is equal to or greater than the consensus service charge.

5. The method according to claim 4, wherein the transaction request comprises a plurality of transaction requests, performing the at least one transaction execution control based on the actual service charge set in the transaction request comprises:
obtaining (S224) a sequence by ranking differences between actual service charges in the plurality of transaction requests and the consensus service charge in a descending order; and
determining (S225) an execution order of the plurality of transaction requests based on the sequence.

6. The method according to claim 4, wherein the transaction request comprises a plurality of transaction requests, performing the at least one transaction execution control based on the actual service charge set in the transaction request comprises:
determining (S226) a historical reference value based on actual service charges of transaction requests of existing blocks in the blockchain;
determining (S227) that the result meets the transaction execution condition in response to determining that the actual service charge set in the transaction request is equal to or greater than the historical reference value; and
determining (S228) an execution order of the plurality of transaction requests based on processing capability of the initiating node in response to determining that the actual service charge is less than the historical reference value.

7. The method according to claim 6, wherein determining(S228) the execution order of the plurality of transaction requests based on the processing capability of the initiating node comprises:
adding the transaction request to a waiting pool and making the transaction request to line up based on the actual service charge; and
extracting a transaction request ranked first from the waiting pool, and determining that the transaction request meets the transaction execution condition when the initiating node is available in a current block-producing period.

8. The method according to claim 6, wherein determining (S226) the historical reference value based on the actual service charges of the transaction requests of the existing blocks in the blockchain comprises:
calculating an average difference value based on a difference between an actual service charge in each transaction request in a last block of the blockchain and a consensus service charge, and determining the average difference as the historical reference value.

9. The method according to claim 1, wherein the endorser end is configured on a blockchain node or configured to interact with a blockchain node based on a preset communication protocol.

10. The method according to claim 1, before performing (S120, S330) the at least one transaction execution control based on the actual service charge set in the transaction request, the method further comprising:
determining whether an initiating account or the initiating node of the transaction request belongs to an organizer of the endorser end.

11. A method for processing blockchain transaction, executed by a first blockchain node, and the method comprising:
generating (S410) a transaction request, and setting an actual service charge in the transaction requests;
transmitting (S420) the transaction request to an endorser end to request the endorser end to perform at least one transaction execution control based on the actual service charge;
obtaining (S430) an endorsement signature of the transaction request fed back by the endorser end, wherein the endorsement signature is generated in response to determining that a result of the transaction execution control meets a transaction execution condition; and
executing (S440) the transaction request, encapsulating the endorsement signature into the transaction request, and submitting the transaction request to a blockchain network to perform a chaining operation.

12. The method according to claim 11, further comprising:
receiving a transaction request submitted by a second blockchain node in the blockchain network; and
refusing to executing the transaction request submitted by the second blockchain node in response to determining that the transaction request submitted by the second blockchain node does not comprise the endorsement signature.

13. The method according to claim 11, after executing (S440) the transaction request, further comprising:
packing a plurality of transaction request submitted by a local node into a current block in a block-producing period of the local node.

14. The method according to claim 11, further comprising:
in the block-producing period of the local node, refusing to pack the acquired transaction request into the current block when the acquired transaction request does not comprise the endorsement signature, or when a comprised endorsement signature does not belong to an organizer of the local node.

15. An electronic device, comprising:
at least one processor; and
a memory communicatively connected to the at least one processor; wherein,
the memory stores instructions executable by the at least one processor, and when the instructions are executed by the at least one processor, the at least one processor is enabled to execute the method according to any one of claims 1-10 or claim 11- 14.
